# EUROPEAN PATENT SPECIFICATION

(11) **EP 0 349 260 B1**
(45) Date of publication and mention of the grant of the patent: **22.02.1995**
(21) Application number: 89306503.7
(22) Date of filing: 27.06.1989
(51) Int. Cl.: F16C 17/10, F16C 33/10

(54) **Dynamic pressure bearing device**
Hydrodynamisches Lager
Palier à fluide à pression dynamique

(30) Priority: 28.06.1988 JP 158119/88; 01.07.1988 JP 162614/88; 15.02.1989 JP 35564/89
(43) Date of publication of application: 03.01.1990
(73) Proprietor: CANON KABUSHIKI KAISHA, Tokyo 146 (JP)
(72) Inventor: Nakasugi, Mikio, Chofu-shi Tokyo (JP); Watanabe, Yoshiaki, Yokohama-shi Kanagawa-ken (JP)
(74) Representative: Beresford, Keith Denis Lewis

(56) References cited:
- EP-A- 0 117 873
- FR-A- 1 501 093
- FR-A- 1 560 068
- FR-A- 2 150 186
- FR-A- 2 231 884
- FR-A- 2 504 620
- PATENT ABSTRACTS OF JAPAN, vol. 12, no. 149 (M-694)[2996], 10th May 1988;& JP-A-62 270 817 (COPAL CO., LTD) 25-11-1987
- PATENT ABSTRACTS OF JAPAN, vol. 12, no. 459 (M-770)[3306], 2nd December 1988;& JP-A-63 186 025 (NIPPON SEIKO K.K.) 01-08-1988
- PATENT ABSTRACTS OF JAPAN, vol. 12, no. 282 (M-726)[3129], 3rd August 1988;& JP-A-63 57 914 (IBIDEN CO., LTD) 12-03-1988

## Description

### FIELD OF THE INVENTION AND RELATED ART

This invention relates to a dynamic pressure bearing device suitably usable, for example, in a video deck, a turn table of an audio player, a rotation unit of a deflection scanner in a laser beam printer or otherwise. More particularly, the invention is concerned with a dynamic pressure bearing device using oil lubrication.

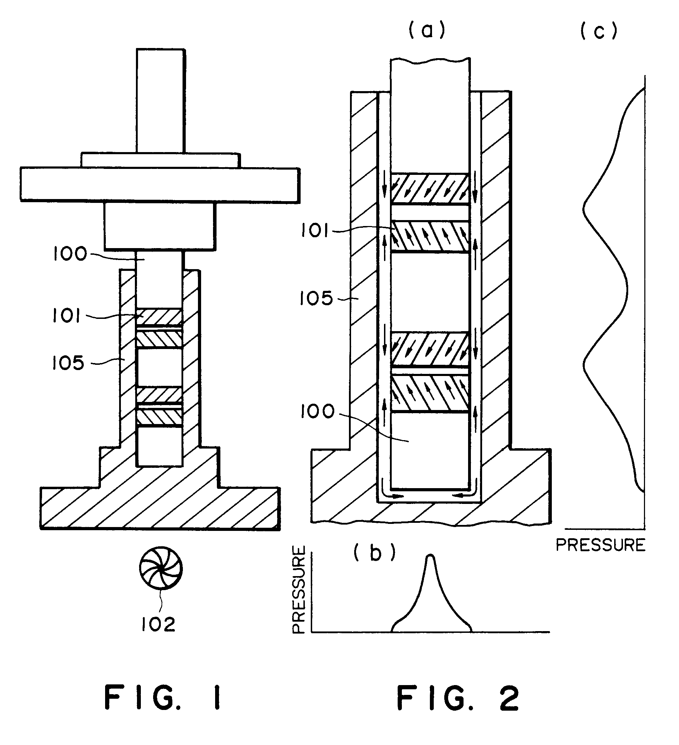

An oil lubrication type dynamic pressure bearing device not known to the public before the priority day of this application is shown in Figure 1, the construction of which does not fall within the scope of the claims of the present application. The device includes a shaft 100 having grooves 101 of herringbone shape formed in a radial surface and swirl or spiral grooves 102 formed on a thrust surface, and a sleeve 105 for supporting the shaft 100. The clearance between the shaft 100 and the sleeve 105, of an order of 2 - 20 microns, is filled with a lubricant oil.

When the dynamic pressure bearing device is not in operation, the oil does not flow and the shaft 100 is contacted to the sleeve 105. As the shaft 100 starts rotation, the oil begins to flow such as depicted by arrows in Figure 2, (a). Then, as the rotation speed of the shaft 100 gradually increases, under the influence of the herringbone grooves 101 formed in the radial surface the oil produces a radial pressure distribution such as shown in Figure 2 (c).

By means of the lubricant oil having such pressure distribution, the shaft 100 is hydraulically supported in the radial direction without contact to the sleeve 105. On the other hand, with the increasing rotation of the shaft, the oil flows along the spiral grooves 102 formed on the thrust surface, such that the oil produces a pressure distribution such as illustrated in Figure 2, (b). By this pressure, the shaft 100 is urged upwardly against its weight and the shaft 100 is hydraulically supported in the thrust direction without contact to the sleeve.

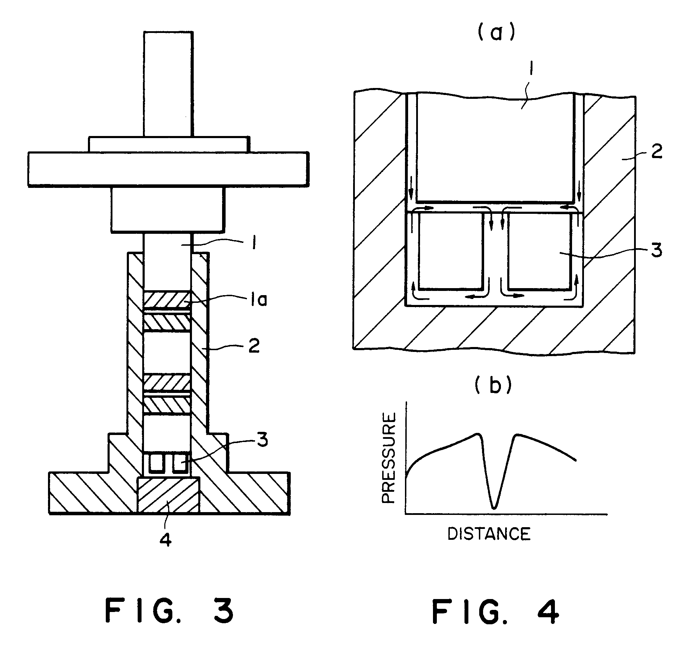

French Patent publication 1560068 (Fig 1) discloses a dynamic pressure bearing device according to the preamble of Claim 1 comprising a shaft member 1, a sleeve member 4, with a shaft member 1 being rotatable relative to the sleeve member and supported therein in a thrust direction and a radial direction; a dynamic pressure producing portion 11 for producing a dynamic pressure for relatively supporting the shaft member and the sleeve member in the radial direction, a recess 10 being formed on the shaft member 1 at a position between the first dynamic pressure producing portion 11 and an open end of the sleeve member 4. There is a forcibly circulating portion 12 formed on the shaft member at a position between the recess 10 and the open end of the sleeve 4. The portion 12 prevents leakage of the fluid and therefore it is suitable for forcibly circulating a fluid into the sleeve when the shaft member 1 rotates relatively to the sleeve member 4. Figure 3 of this prior art document shows a variation on the above described arrangement differing therefrom only in that the forcible circulating portion may be "formed on the sleeve member 4".

French Patent publication 1560068 (Fig. 1) discloses also a dynamic pressure bearing device according to the preamble of Claim 2.

The present invention is defined by the independent claims 1 and 2. How the invention may be carried out will now be described by way of example only and with reference to the accompanying drawings.

### BRIEF DESCRIPTION OF THE DRAWINGS

Figure 1 is a sectional view of a known type dynamic pressure bearing device.

Figure 2 is a schematic representation, illustrating the flow of a lubricant oil in the known type dynamic pressure bearing device, a pressure distribution of the lubricant oil along the sleeve side surface and a pressure distribution of the lubricant oil along the sleeve bottom surface.

Figure 3 is a sectional view of a dynamic pressure bearing device according to a first embodiment of the present invention.

Figure 4 is a schematic representation, illustrating an insert member used in the first embodiment and a pressure distribution related thereto.

Figures 5A - 5C show the insert member used in the first embodiment, wherein Figure 5A is a plan view, Figure 5B is a side view and Figure 5C is a bottom view.

Figure 6 is a sectional view of a dynamic pressure bearing device according to a second embodiment of the present invention.

Figure 7 is an enlarged section showing a porous material member used in the second embodiment.

Figure 8 is a sectional view of a dynamic pressure bearing device according to a third embodiment of the present invention.

Figure 9 is a sectional view, illustrating the function of the dynamic pressure bearing device of the third embodiment.

Figures 10A - 10C show an insert member used in the second embodiment, wherein Figure 10A is a plan view, Figure 10B is a side view and Figure 10C is a bottom view.

Figure 11 is a sectional view of a dynamic pressure bearing device according to a fourth embodiment of the present invention.

Figure 12 is a sectional view of a dynamic pressure bearing device according to a fifth embodiment not in accordance with the present invention.

Figure 13 is a sectional view of a dynamic pressure bearing device according to a sixth embodiment of the present invention.

Figure 14 is a cross-section taken on a line A-A in Figure 13.

Figures 15A - 15C show an insert member used in the sixth embodiment, wherein Figure 15A is a plan view, Figure 15B is a side view and Figure 15C is a bottom view.

Figure 16 is a cross-section showing a major portion of a dynamic pressure bearing device according to a seventh embodiment of the present invention.

Figure 17 is a section of a dynamic pressure bearing device according to an eighth embodiment of the present invention.

Figure 18 is a section of a dynamic pressure bearing device according to a ninth embodiment of the present invention.

Figure 19 is a section of a dynamic pressure bearing device according to a tenth embodiment of the present invention.

Figure 20 is a sectional view of a dynamic pressure bearing device according to an eleventh embodiment of the present invention.

### DESCRIPTION OF THE PREFERRED EMBODIMENTS

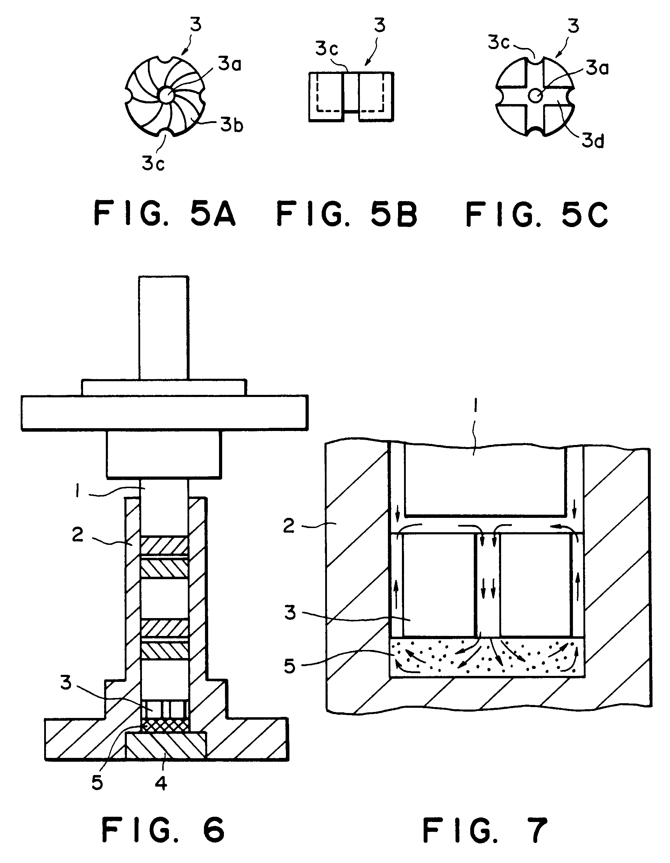

Referring to Figures 3 - 5, showing the first embodiment of the present invention, a shaft 1 has grooves 1a of herringbone shape formed with a depth of about 2 - 20 microns in the radial direction (a direction perpendicular to the axial direction of the shaft). Sleeve 2 receives the shaft 1, and one of them is rotatable. In this embodiment, the shaft 1 is rotatable to the sleeve 2. Insert member 3 which is substantially in the form of a cylinder has a central bore 3a, swirl of spiral pattern grooves 3b formed on its surface for bearing the shaft 1, and grooves 3c formed in the circumferential surface thereof to extend in the thrust direction (a direction parallel to the axial direction), as shown in Figures 5A - 5C. Closing member 4 is press-fitted into the sleeve 2 so as to close the same against leakage of an oil.

The dynamic pressure bearing device can be assembled in the following manner: First, an insert member 3 such as shown in Figure 5 is press-fitted into the sleeve 2 from the bottom surface of the sleeve. Thereafter, the closing member 4 is press-fitted into the sleeve. Then, an oil is injected into the sleeve 2. Finally, the shaft 1 is inserted into the sleeve 2 from the above so that the former is fitted into the latter.

The operation of the present embodiment will now be explained. During low speed rotation, the oil flows along the herringbone grooves 1a such as shown in Figure 3, whereby a pressure distribution such as shown in Figure 2, (c), is formed on the radial surface (a surface to which a force in the radial direction is applied). By this, the shaft 1 and the sleeve 2 are maintained in a non-contact relationship in the radial direction. Also, in the range of low speed rotation and middle speed rotation, first at the thrust surface (a surface to which a force in the thrust direction is applied) the oil begin to flow along the spiral grooves 3b (Fig. 5). The groove 3b is shallow, as having a depth of about 2 - 20 microns. Since the oil continuously flows, the pressure becomes higher as the oil comes closer to the central part of the shaft. Since the insert member 3 has its bore 3a formed at the central part thereof, the oil flows into the bore 3a. Thereafter, the oil goes through a C-shaped groove 3d and then flows along the groove 3c, such as illustrated in Figure 4, (a) and Fig. 5. Thus, as a result of the oil circulation described above, the oil pressure, at the shaft thrust surface and the insert member 3, produces such pressure distribution as depicted in Figure 4, (b). Therefore, there is produced no negative pressure in the neighborhood of the peripheral edge portion of the shaft.

Figures 6 and 7 show a second embodiment of the present invention. The same reference numerals are assigned to the elements corresponding to those of the first embodiment. In this embodiment, a porous material member 5 is interposed between an insert member 3 and a closure member 4. For assembling of the dynamic pressure bearing device of the present embodiment, the insert member 3 is press-fitted into a sleeve 2 and then the porous material member 5 is press-fitted thereinto. Thereafter, the closure member 4 is press-fitted into the sleeve 2. Subsequently, an oil is injected into the sleeve 2 and then a shaft 1 is inserted from the above. Here, the porous material member 5 may be integral with or separate from the insert member 3. As for the porous material member, preferably it may be a molded part made of stainless steel or ceramics.

In the second embodiment, the porous material member 5 is interposed at least at a part of an oil circulation passageway, such that a filtering function is provided and any powder in the oil produced by wearing can be removed by the porous material member 5. While such a porous material member is used in this embodiment as a filter, any other member may be used provided that it has a filtering function.

Although the first and second embodiments use an insert member having at least one of a bore and a groove, for circulation of the oil, the oil can be circulated without use of such an insert member, for example, by providing the sleeve itself with a groove or bore. By way of example, such a groove or bore may be formed directly on the closure member 4.

In the foregoing embodiments, the oil can be circulated not only in the circumferential direction along the radial surface but also in the thrust direction (vertical circulation). Also, the oil circulation at the thrust surface of the shaft effectively avoids the creation of negative pressure at the thrust of the shaft. This prevents contact between the sleeve and the shaft which otherwise may be caused during the rotation. Also, the vibration or non-uniform rotation does not easily occur. Further, good oil circulation is provided and a larger amount of oil can be used without increasing the resistance between the sleeve and the shaft due to the oil. Therefore, temperature increase can be prevented. Also, by this oil circulation, galling due to the powder produced by wearing can be reduced.

The circulating function at the thrust surface can be provided by forming a bore or groove in the shaft, for example. However, with the reduction in size of the device followed by reduction in diameter of the shaft to a size of 2 - 3 mm, forming such a bore or groove in the shaft is not easy. Further, if such a bore or groove is formed after a herringbone groove which determines the flow of the oil is formed on the shaft, the precision is not good. In the foregoing embodiments, as compared therewith, after the machining the insert member is press-fitted into the sleeve. This facilitates the process and, as a result, allows reduction in cost.

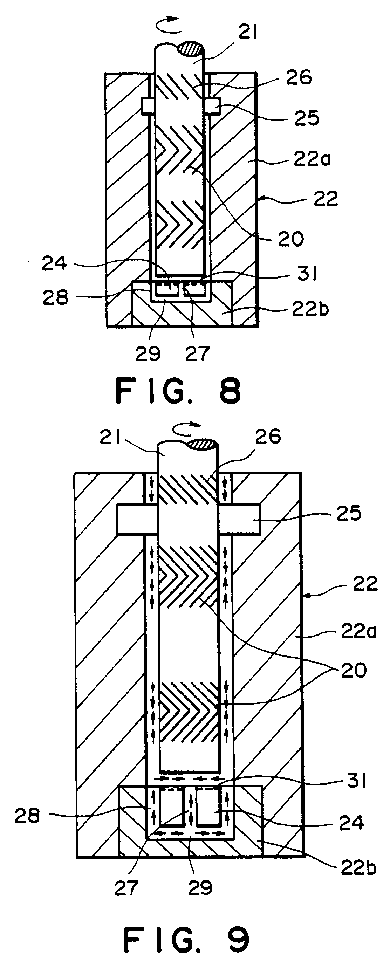

A third embodiment of the present invention will now be explained. Figure 8 is a sectional view of a dynamic pressure bearing device according to this embodiment.

In Figure 8, denoted at 22 is a sleeve which is in the form of a cylinder having an inside circumferential surface and a bottom surface. In the embodiment as illustrated, the sleeve 22 is provided by a cylinder 22a and a thrust plate 22b fixed to the bottom of the cylinder 22a. Rotational shaft 21 is rotatably mounted into the sleeve 22, and the shaft can be rotated by a driving means, not shown, of the rotation unit.

Denoted at 20 is a herringbone shallow groove formed on the outside circumferential surface of the rotational shaft 21, for producing a dynamic pressure supporting the shaft in the radial direction. The groove 20 has a depth of about 2 - 20 microns. While in the illustrated embodiment the shallow groove 20 is provided on the outside circumferential surface of the rotational shaft 21, it may be provided on the inside circumferential surface of the sleeve 22 or, alternatively, both of the shaft and the sleeve may be provided with such grooves. Further, as illustrated, in this embodiment there are provided two herringbone grooves at two different sites on the outside circumferential surface of the shaft. However, three or more herringbone grooves may be provided.

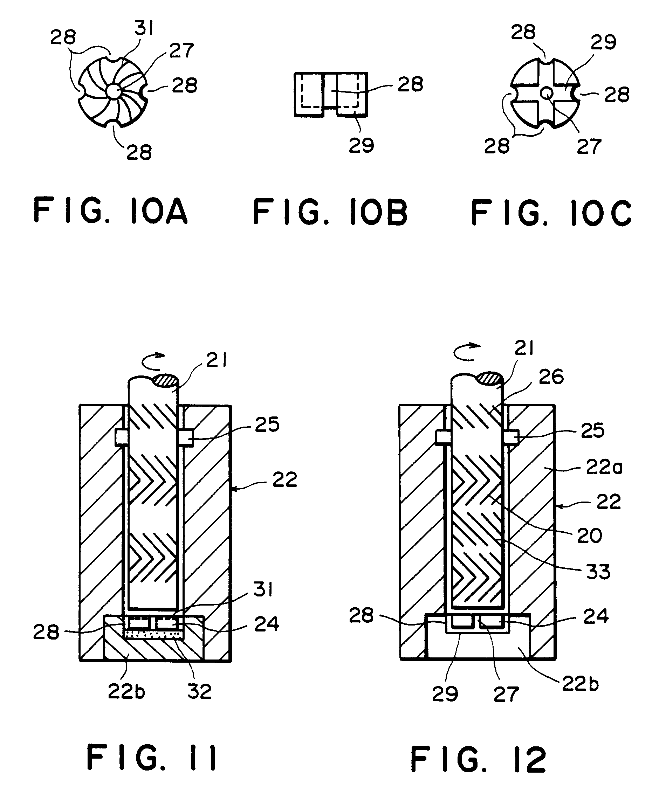

Denoted at 24 is an insert member which is fixed to the thrust plate 22b. As illustrated in Figures 10A - 10C, the insert member has a central bore 27 which is formed at the center of the insert member to extend in the axial direction; a radial groove 29 formed on the bottom of the insert member 24 to extend radially outwardly from the central bore 27; peripheral grooves 28 formed on the outside circumferential part of the insert member 24 to extend in parallel to the central bore 27; and spiral shallow grooves 31 formed on the top surface of the insert member 24 with a depth of about 2 - 20 microns.

Denoted at 25 is a recess formed in the sleeve 22 at a position which is on the open end side of the shallow groove 20 (a side of the groove close to the open end of the sleeve). Denoted at 26 are shallow grooves, having a depth of about 2 - 20 microns, formed on the open end side of the recess 25 of the sleeve 22. These grooves are so formed that, as the rotational shaft 21 rotates within the sleeve 22, a lubricant oil with which the clearance between the rotational shaft 21 and the sleeve 22 is filled, is caused to flow in a direction to the inside of the sleeve 22. In the illustrated embodiment, the shallow grooves 26 are provided on the outside periphery of the rotational shaft 21. However, they may be provided on the inside circumferential surface of the sleeve 22 or, alternatively, both of the rotational shaft and the sleeve may be provided with such grooves.

Referring now to Figure 9, the function of the dynamic pressure bearing device of this embodiment will be explained.

Arrows in the drawing denote the direction of flow of the lubricant oil. The function and the effect of the bore formed in the insert member 24 are the same as those of the insert member used in the first embodiment.

As described, the sleeve 22 is provided with a recess 25 of a depth of about 0.01 - 1 mm, at a part adjacent to the open end thereof. Further, at a position outside thereof, shallow grooves 26 of a depth of about 2 - 20 microns are formed on the outer circumferential surface of the rotational shaft 21, these grooves being adapted to cause the lubricant oil to flow into the sleeve 22. With this arrangement, the lubricant oil can be kept within the recess 25, without scattering toward the outside, even when the rotational shaft 21 rotates at a high speed.

Thus, the recess 25 can function as a reservoir for the fluid forcibly fed under pressure into the sleeve by the shallow grooves 26. The recess 25 may be provided on the shaft.

Figure 11 is a sectional view of a dynamic pressure bearing device according to a fourth embodiment of the present invention. In this embodiment, a porous material member 32 is mounted into a radial bore 29 of an insert member 24, such as shown in Figure 8. By the intervention of the porous material member 32 at a part of the circulation passageway for the lubricant oil, any powder in the lubricant oil produced by wearing can be removed (collected).

The porous material member 32 may be integral with or separate from the insert member 24 or the sleeve 22. In any case, substantially the same effect is attainable.

Figure 12 is a sectional view of a dynamic pressure bearing device according to a fifth embodiment of the present invention. In this embodiment, shallow grooves 33 formed in the outside circumferential surface of a rotational shaft 21 function to feed, under pressure, the lubricant oil toward the bottom of the sleeve 22. As a result, the lubricant oil which is at the clearance between the bottom of the sleeve 22 and the bottom of the rotational shaft 21 has a high pressure, such that it supports the rotational shaft 21 out of contact to the sleeve. In this case, the spiral shallow grooves 31 of the insert member 24 are not necessary.

In the fourth and fifth embodiments as described above, the elements corresponding to those in the third embodiment are denoted by like numerals.

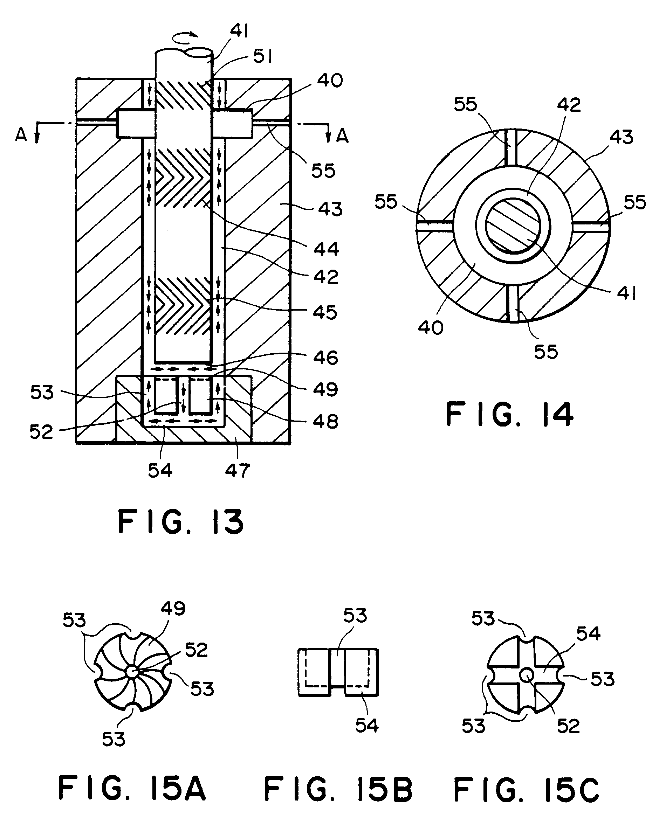

Referring now to Figures 13 - 15, a sixth embodiment of the present invention will now be explained.

Denoted at 41 is a shaft which is rotatable while supporting a rotation unit such as a polygonal scanner mirror, for example. The shaft is rotatably mounted to a sleeve 43 with the intervention of a fluid 42 such as a lubricant oil. Denoted at 44 and 45 are herringbone shallow grooves formed in the radial surface of the shaft 41. Each groove has a depth of about 2 - 20 microns. Denoted at 46 is an end face of the shaft 41. An inside bottom face of the sleeve 43, opposed to the end face 46, is provided by an insert member 48 mounted into a recess formed in a thrust plate 47. As shown in Figures 15A - 15C, the insert member 48 has spiral shallow grooves 49 formed on the surface thereof to a groove depth of about 2 - 20 microns; a central bore 52 formed at the central part thereof; vertical grooves 53 formed in the outside circumferential part thereof; and a radial bottom groove 54 formed on the bottom thereof to communicate the central bore 52 with the vertical grooves 53. At the inside part of the sleeve 43 adjacent to an open end thereof, there is formed a ring-like inside groove of a groove depth of about 0.01 - 2 mm. Further, at a part of the radial surface of the shaft 41, which is on the open end side of the inside groove 10 (a side of the groove close to the open end of the sleeve), there are formed spiral shallow grooves 51 to a groove depth of about 2 - 20 microns. Additionally, in this embodiment, small-diameter bores 55 each in the form of a radial throughbore of an order of ⌀ 0.1 - 1.0, are formed in the inside groove 40 so as to open the inside pressure to the atmosphere.

The operation of the present embodiment will now be explained.

As the shaft 41 rotates, by the action of the shallow grooves 44 and 45 there is produced a dynamic pressure in the radial direction (Figure 2, (c)), so that in this radial direction the shaft 41 and the sleeve 43 are maintained in a non-contact state. Also, by the action of the shallow grooves 51, the lubricant oil is forcibly flown into the sleeve, without being scattered even by the high speed rotation.

By this pressure supplied fluid, the pressure in the inside groove 40 increases. However, any excessive increase in the pressure within the inside groove 40 is accommodated by the small-diameter bores 55 formed in the inside groove 40. More particularly, these small-diameter bores 55 are communicated with the outside atmosphere, such that when the pressure in the inside groove 40 increases the fluid enters into the bores 55. Within each small-diameter bore, due to the effect of pneumatic spring in relation to the atmosphere (ambience pressure), the pressure can be alleviated. Each bore 55 has a very small diameter and, by the function of the surface tension or conduit resistance, the fluid entering into the small-diameter bore 55 does not leak outwardly from the bore. This arrangement is effective to prevent the fluid having been pressure-supplied by the shallow grooves 51, from providing an excessive floating force in the thrust direction.

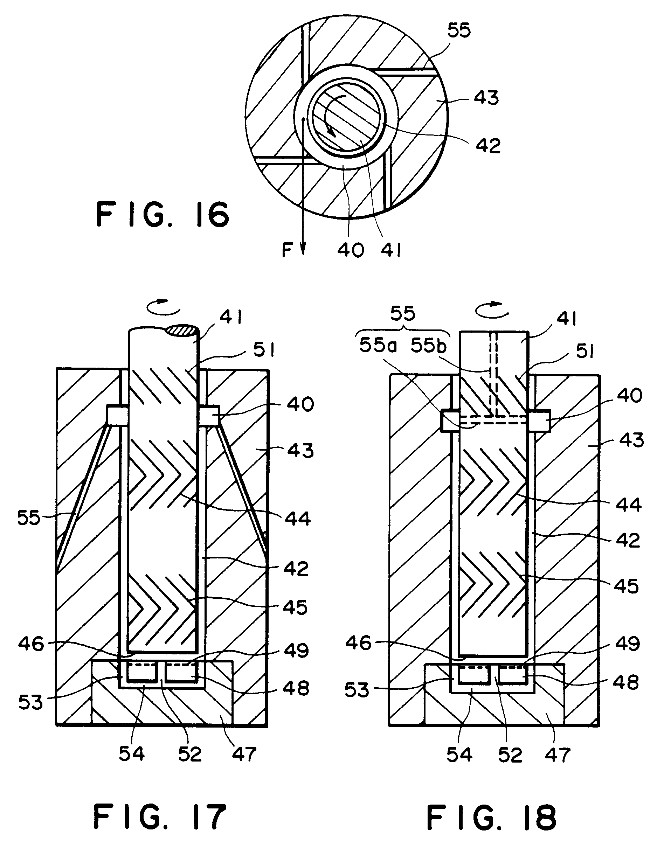

Figure 16 shows a seventh embodiment of the present invention, wherein the elements corresponding to those in the sixth embodiment are denoted by like numerals.

In this embodiment, small-diameter bores 55 are formed in an inside groove 40 of a sleeve 43, each being provided substantially in a direction of tangent as can be opposed to a centrifugal force F to be applied to the fluid 42 by the rotation of the shaft 41.

By the provision of these small-diameter bores 55 each in a direction opposed to the centrifugal force F to be applied to the fluid 42, as compared with the previous embodiment the possibility of leakage of the fluid 42 from the small-diameter bores 55 due to the centrifugal force F caused when the shaft 41 rotates at a high speed, can be reduced to smaller.

Further, the provision of each small-diameter bore 55 substantially in a tangential direction, is effective to increase the conduit length, as compared with the sixth embodiment wherein the small-diameter bores 55 are provided radially. Namely, the conduit resistance of the small-diameter bores 55 is larger and, therefore, the prevention of leakage of the fluid 42 to the outside is better.

Figure 17 shows an eighth embodiment of the present invention, wherein the elements corresponding to those in the sixth embodiment are denoted by like numerals.

In this embodiment, small-diameter bores 55 are formed in an inside groove 40 of a sleeve 43 and are formed downwardly with a certain inclination with respect to the axial direction of the sleeve 43.

Thus, the conduit length can be prolonged as compared with a case where the bores are provided orthogonally to the shaft 41 and, therefore, the conduit resistance of the small-diameter bores 55 increases. As a result, the prevention of leakage of the fluid 42 to the outside is improved.

Figure 18 shows a ninth embodiment of the present invention, wherein the elements corresponding to those in the sixth embodiment are denoted by like numerals.

In this embodiment, small-diameter bores 55 are formed not in a sleeve 43 but in a shaft 41. These small-diameter bores 55 are provided by lateral bores 55a each being formed radially outwardly at an outside circumferential position of the shaft 41 corresponding to the inside groove 40 of the sleeve 43, and a longitudinal bore 55b provided in the direction of the central axis of the shaft 41. At the center of the shaft 41, these lateral bores 55 are communicated with the longitudinal bore 55b.

Accordingly, while the centrifugal force acting on the fluid 42 causes the fluid 42 to apply a force radially outwardly of the shaft 41, the provision of the small-diameter bores 55 within the shaft 41, actable against the direction of the action of the force, is effective to prevent, with certainty, the leakage of the fluid 42 to the outside.

Although in the first to ninth embodiments description has been made to a dynamic pressure bearing device of the type that a shaft 41 is rotatable and a sleeve 43 is stationary, the invention is of course applicable also to such dynamic pressure bearing device of the type in which a shaft 41 is stationary while a sleeve 43 is rotatable.

Any one of the foregoing embodiments may be combined with another. For example, the eighth embodiment and the ninth embodiment may be combined to ensure further prolongation of the conduit length. Description will now be made of tenth and eleventh embodiments of the present invention, wherein a dynamic pressure bearing device such as of the sixth embodiment is used in a scanning optical system of a laser beam printer, for example, or a cylinder head of a video instrument such as a VTR.

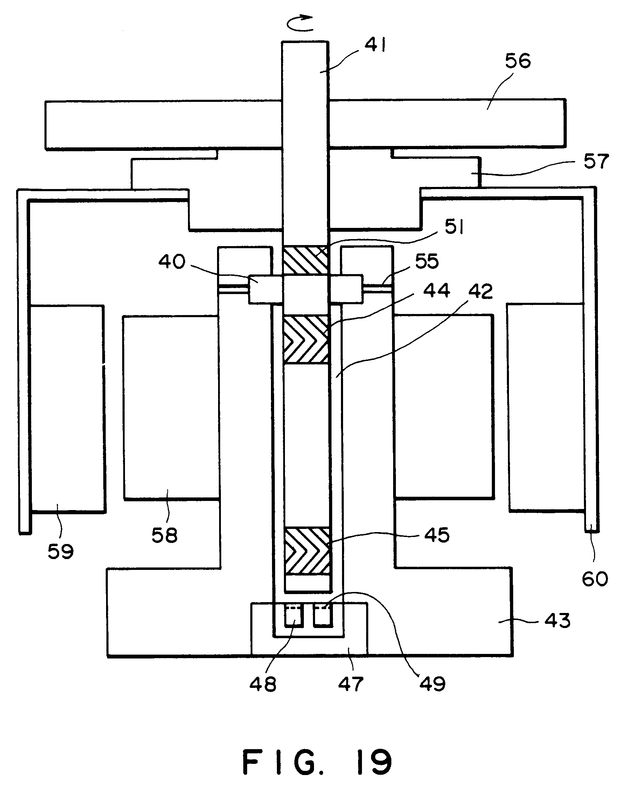

Figure 19 shows the tenth embodiment wherein the dynamic pressure bearing device is used in a scanning optical system for a laser beam printer. The same reference numerals are assigned to corresponding elements.

Denoted in Figure 19 at 56 is a polygonal mirror coupled to a supporting member 57 and a shaft, for scanning a laser beam; at 57 is the supporting member for supporting the polygonal mirror 56 and being coupled to the shaft 41; at 58 and 59 are a motor coil and a motor magnet, for rotating the shaft 41 relatively to a sleeve, the motor coil and the motor magnet being driven in response to a driving signal supplied thereto from a driving means, not shown.

Denoted at 60 is a frame member fixed to a supporting member 57 for supporting the motor magnet 59.

In operation of the described structure, by the action of the motor magnet 60 and the motor coil 58, the shaft 41 is rotated to cause rotation of the polygonal mirror 56. In response, dynamic pressure producing grooves 44, 45 and 49 operate to produce a dynamic pressure by which the shaft 41 and the polygonal mirror 56 are supported stably, with respect to both the thrust direction and the radial direction. Thus, they can be rotated stably.

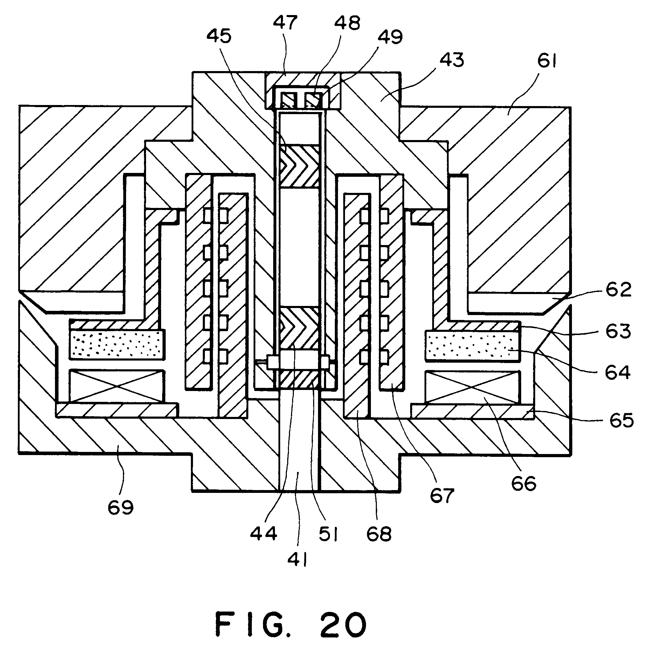

Figure 20 shows the eleventh embodiment, wherein a dynamic pressure bearing device such as of the sixth embodiment is used in a cylinder head which is used in a video instrument such as a VTR or otherwise, for information recording and reproduction. Same reference numerals are assigned to corresponding elements.

Denoted at 61 is an upper drum fixed to a sleeve 43; at 62 is a rotary head secured at a predetermined position on an end portion of the upper drum 61; at 63 is a magnet yoke; at 64 is a motor magnet coupled to the sleeve 43 by way of the magnet yoke 63; at 65 is a yoke; at 66 is a motor coil coupled to a lower drum 69 through the yoke 65; at 67 is a rotor of a rotary capacitor, having an inside surface opposed to a stator 68 and an end thereof fixed to the sleeve 43; at 68 is the stator of the rotary capacitor, which is concentric with the shaft 41 and is fixed to the lower drum 69.

In operation, by the action of the motor magnet 64 and the motor coil 66, the sleeve 43 is rotated. As the sleeve 43 rotates, video information recorded on a video tape (not shown) contacted to the upper and lower drums is picked up, the thus read signal is transmitted, without contact, from the rotor 67 to the stator 68 and, finally, it is transmitted to a signal processing means, not shown.

While the invention has been described with reference to the structures disclosed herein, it is not confined to the details set forth and this application is intended to cover such modifications or changes as may come within the purposes of the improvements or the scope of the following claims.

## Claims

1. A dynamic pressure bearing device, comprising:
a shaft member (1)
a sleeve member (2) rotatable relative to said shaft member (1) and for accommodating said shaft member (1) therein:
first dynamic pressure producing means (1a) for producing a dynamic pressure for relatively supporting said shaft member (1) and said sleeve member (2) in a radial direction;
second dynamic pressure producing means (3) for producing a dynamic pressure for relatively supporting said shaft member (1) and said sleeve member (2) in a thrust direction, said second dynamic pressure producing means (3) being defined between a face of said shaft member (1) and said sleeve member (2) and including a thrust surface opposed to said face of said shaft member, said second dynamic pressure producing means comprising a circulation passageway for circulating a fluid along at least a part of said thrust surface, said circulation passageway including a path (3b) for allowing the fluid to flow from a middle portion of said thrust surface toward an outer periphery of said thrust surface, characterised in that:
said face of the shaft member (1) is a free end face of the shaft member (1), and
said path (3b) is such that said fluid flow does not extend through the first dynamic pressure producing means.

2. A dynamic pressure bearing device comprising a shaft member (41), a sleeve member (43) accommodating said shaft member (41), with said shaft member (41) being rotatable relative to said sleeve member (43) and supported therein in a thrust direction and a radial direction; a dynamic pressure producing portion (44,45) for producing a dynamic pressure for relatively supporting said shaft member (41) and said sleeve member (43) in the radial direction, a recess (40) being formed on one of said members (41,43) at a position between said dynamic pressure producing portion (44,45) and an open end of said sleeve member (43); and a forcibly circulating portion (51) formed on said shaft member (41) at a position between said recess (40) and the open end of said sleeve member (43), for forcibly circulating a fluid into said sleeve member (43) when the shaft member (41) rotates relatively to said sleeve member (43), the forcible circulating portion (51) being formed on the shaft member (41) or on the sleeve member (43),
characterised in that:
a throughbore (55) is formed in either said shaft member (41) or said sleeve member (43) and communicates with ambient pressure and a clearance between said shaft member (41) and said sleeve member (43) with said throughbore (55) being between said dynamic pressure producing portion (44,45) and said forcibly circulating portion (51), the recess (40) being formed on said sleeve member (43) or shaft member (41) and the throughbore (55) extending from the inside periphery to the outside periphery of the sleeve member (43).

3. A dynamic pressure bearing device as claimed in Claim 2, in which the throughbore (55) extends substantially radially outwardly with respect to the shaft member (41).

4. A dynamic pressure bearing device as claimed in Claim 2, in which the throughbore (55) extends substantially tangentially with respect to the shaft member (41).

5. A dynamic pressure bearing device as claimed in Claim 2, in which the throughbore (55) is inclined with respect to the axis of the shaft member (41) and is located within the sleeve member (43).

6. A dynamic pressure bearing device as claimed in any previous claim, in which the means (3a, 3b, 3c, 3d) for producing the thrust pressure is incorporated in an insert member (3) which is a press-fit in the sleeve member (2).

7. A dynamic pressure bearing device according to any previous claim, further comprising a porous material member (5) provided in said fluid circulation passageway (3).

8. A dynamic pressure bearing device according to claim 7, wherein said porous material member is made of stainless steel.

9. A dynamic pressure bearing device according to claim 7, wherein said porous material member is made of ceramics.

10. A dynamic pressure bearing device according to any of the claims 2 to 9, further comprising a fluid circulating passageway for circulating a fluid along at least a part of a thrust surface between the shaft member and the sleeve member.

## Patentansprüche

1. Dynamische Druck-Lager-Vorrichtung, umfassend:
ein Wellen-Glied (1)
ein Führungs-Glied (2), das in bezug auf das Wellen-Glied (1) drehbar ist und zur Aufnahme des Wellen-Gliedes (1) darin:
erste, einen dynamischen Druck erzeugende Mittel (1a) zur
Erzeugung eines dynamischen Druckes, um das Wellen-Glied (1) und das Führungs-Glied (2) in einer Radialrichtung relativ zueinander zu lagern;
zweite, einen dynamischen Druck erzeugende Mittel (3) zur Erzeugung eines dynamischen Druckes, um das Wellen-Glied (1) und das Führungs-Glied (2) in einer Druckrichtung relativ zueinander zu lagern, wobei die zweiten, einen dynamischen Druck erzeugenden Mittel (3) zwischen einer Fläche des Wellen-Gliedes (1) und des Führungs-Gliedes (2) begrenzt sind und eine Druckfläche aufweisen, die der Fläche des Wellen-Gliedes gegenüberliegt, wobei die zweiten einen dynamischen Druck erzeugenden Mittel einen Zirkulations-Durchgang zur Zirkulation eines Fluids entlang mindestens eines Teils der Druckfläche umfassen, wobei der Zirkulations-Durchgang einen Weg (3b) umfaßt, um zu ermöglichen, daß das Fluid von einem mittleren Abschnitt der Druckfläche zu einem äußeren Umfang der Druckfläche strömt, dadurch gekennzeichnet, daß:
die Fläche des Wellen-Gliedes (1) eine freie Endfläche des Wellen-Gliedes (1) ist und daß
der Weg (3b) so ist, daß sich das Fluid nicht durch die ersten, einen dynamischen Druck erzeugenden Mittel erstreckt.

2. Dynamische Druck-Lager-Vorrichtung, umfassend ein Wellen-Glied (41), ein Führungs-Glied (43), das das Wellen-Glied (41) aufnimmt, wobei das Wellen-Glied (41) in bezug auf das Führungs-Glied (43) drehbar ist und in ihm in einer Druckrichtung und in einer Radialrichtung gelagert ist; einen einen dynamischen Druck erzeugenden Abschnitt (44, 45) zur Erzeugung eines dynamischen Drucks, um das Wellen-Glied (41) und das Führungs-Glied (43) in der Radialrichtung relativ zueinander zu lagern, eine Ausnehmung (40), die auf einem der Glieder (41, 43) in einer Stellung zwischen dem einen dynamischen Druck erzeugenden Abschnitt (44, 45) und einem offenen Ende des Führungs-Gliedes (43) gebildet ist; und einen Zwangs-Umlauf-Abschnitt (51), der auf dem Führungs-Glied (41) in einer Stellung zwischen der Ausnehmung (40) und dem offenen Ende des Führungsgliedes (43) gebildet ist, um ein Fluid zwangsweise in das Führungs-Glied (43) zirkulieren zu lassen, wenn das Wellen-Glied (41) in bezug auf das Führungs-Glied (43) rotiert, wobei der Zwangs-Umlauf-Abschnitt (51) auf dem Wellen-Glied (41) oder dem Führungs-Glied (43) gebildet ist,
dadurch gekennzeichnet, daß:
eine Durchgangsbohrung (55) entweder in dem Wellen-Glied (41) oder in dem Führungs-Glied (43) gebildet ist und mit dem Umgebungsdruck sowie mit einem Spalt zwischen dem Wellen-Glied (41) und dem Führungs-Glied (43) in Verbindung steht, wobei die Durchgangsbohrung (55) zwischen dem einen dynamischen Druck erzeugenden Abschnitt (44, 45) und dem Zwangs-Umlauf-Abschnitt (51) gebildet ist, wobei die Ausnehmung (40) in dem Führungs-Glied (43) oder dem Wellen-Glied (41) gebildet ist und wobei sich die Durchgangsbohrung (55) vom inneren Umfang zum äußeren Umfang des Führungs-Gliedes (43) erstreckt.

3. Dynamische Druck-Lager-Vorrichtung nach Anspruch 2, in der sich die Durchgangsbohrung (55) in bezug auf das Wellen-Glied (41) im wesentlichen radial nach außen erstreckt.

4. Dynamische Druck-Lager-Vorrichtung nach Anspruch 2, in der sich die Durchgangsbohrung (55) im wesentlichen tangential in bezug auf das Wellen-Glied (41) erstreckt.

5. Dynamische Druck-Lager-Vorrichtung nach Anspruch 2, in der die Durchgangsbohrung (55) in bezug auf die Achse des Wellen-Gliedes (41) geneigt ist und innerhalb des Führungs-Gliedes (43) angeordnet ist.

6. Dynamische Druck-Lager-Vorrichtung nach einem der vorangegangenen Ansprüche, in der die Mittel (3a, 3b, 3c, 3d) zur Erzeugung des Axialdruckes in einem Einlage-Glied (3) aufgenommen sind, das in einem Preßsitz im Führungs-Glied (2) aufgenommen ist.

7. Dynamische Druck-Lager-Vorrichtung nach einem der vorangegangenen Ansprüche, weiters umfassend ein Glied (5) aus porösem Material, das in dem Fluid-Zirkulations-Durchgang (3) vorgesehen ist.

8. Dynamische Druck-Lager-Vorrichtung nach Anspruch 7, wobei das Glied aus porösem Material aus rostfreiem Stahl hergestellt ist.

9. Dynamische Druck-Lager-Vorrichtung nach Anspruch 7, wobei das Glied aus porösem Material aus Keramik hergestellt ist.

10. Dynamische Druck-Lager-Vorrichtung nach einem der Ansprüche 2 bis 9, weiters umfassend einen Fluid-Zirkulations-Durchgang zur Zirkulation eines Fluids entlang mindestens eines Teils einer Druckfläche zwischen dem Wellen-Glied und dem Führungs-Glied.

## Revendications

1. Dispositif à palier à pression dynamique, comportant :
un élément d'arbre (1)
un élément de manchon (2) pouvant tourner par rapport audit élément d'arbre (1) et destiné à loger ledit élément d'arbre (1) ;
des premiers moyens (1a) de production d'une pression dynamique destinés à produire une pression dynamique pour supporter relativement ledit élément d'arbre (1) et ledit élément de manchon (2) dans une direction radiale ;
des seconds moyens (3) de production d'une pression dynamique destinés à produire une pression dynamique pour supporter relativement ledit élément d'arbre (1) et ledit manchon (2) dans une direction de poussée, lesdits seconds moyens (3) de production d'une pression dynamique étant définis entre une face dudit élément d'arbre (1) et ledit élément de manchon (2) et comprenant une surface de poussée opposée à ladite face dudit élément d'arbre, lesdits seconds moyens de production d'une pression dynamique comportant un passage de circulation pour la circulation d'un fluide le long d'au moins une partie de ladite surface de poussée, ledit passage de circulation comprenant un trajet (3b) destiné à permettre au fluide de s'écouler d'une partie médiane de ladite surface de poussée vers une périphérie extérieure de ladite surface de poussée, caractérisé en ce que :
ladite face de l'élément d'arbre (1) est une face extrême libre de l'élément d'arbre (1), et
ledit trajet (3b) est tel que ledit écoulement de fluide ne passe pas à travers les premiers moyens de production d'une pression dynamique.

2. Dispositif à palier à pression dynamique comportant un élément d'arbre (41), un élément de manchon (43) logeant ledit élément d'arbre (41), ledit élément d'arbre (41) pouvant tourner par rapport audit élément de manchon (43) et étant supporté dans celui-ci dans une direction de poussée et dans une direction radiale ; une partie (44, 45) de production d'une pression dynamique destinée à produire une pression dynamique pour supporter relativement ledit élément d'arbre (41) et ledit élément de manchon (43) dans la direction radiale, un évidement (40) étant formé sur l'un desdits éléments (41, 43) dans une position située entre ladite partie (44, 45) de production d'une pression dynamique et une extrémité ouverte dudit élément de manchon (43) ; et une partie (51) de circulation forcée formée sur ledit élément d'arbre (41) dans une position située entre ledit évidement (40) et l'extrémité ouverte dudit élément de manchon (43), pour faire circuler à force un fluide vers l'intérieur dudit élément de manchon (43) lorsque l'élément d'arbre (41) tourne relativement audit élément de manchon (43), la partie (51) de circulation forcée étant formée sur l'élément d'arbre (41) ou sur l'élément de manchon (43),
caractérisé en ce que :
un alésage traversant (55) est formé soit dans ledit élément d'arbre (41) soit dans ledit élément de manchon (43) et communique avec la pression ambiante et un espace entre ledit élément d'arbre (41) et ledit élément de manchon (43), ledit alésage traversant (55) étant entre ladite partie (44, 45) de production d'une pression dynamique et ladite partie (51) de circulation forcée, l'évidement (40) étant formé sur ledit élément de manchon (43) ou sur ledit élément d'arbre (41), et l'alésage traversant (55) s'étendant de la périphérie intérieure jusqu'à la périphérie extérieure de l'élément de manchon (43).

3. Dispositif à palier à pression dynamique selon la revendication 2, dans lequel l'alésage traversant (55) s'étend sensiblement radialement vers l'extérieur par rapport à l'élément d'arbre (41).

4. Dispositif à palier à pression dynamique selon la revendication 2, dans lequel l'alésage traversant (55) s'étend sensiblement tangentiellement par rapport à l'élément d'arbre (41).

5. Dispositif à palier à pression dynamique selon la revendication 2, dans lequel l'alésage traversant (55) est incliné par rapport à l'axe de l'élément d'arbre (41) et est situé à l'intérieur de l'élément de manchon (43).

6. Dispositif à palier à pression dynamique selon l'une quelconque des revendications précédentes, dans lequel les moyens (3a, 3b, 3c, 3d) destinés à produire la pression de poussée sont incorporés dans un élément rapporté (3) qui est ajusté à force dans l'élément de manchon (2).

7. Dispositif à palier à pression dynamique selon l'une quelconque des revendications précédentes, comportant en outre un élément (5) en matière poreuse prévu dans ledit passage (3) de circulation de fluide.

8. Dispositif à palier à pression dynamique selon la revendication 7, dans lequel ledit élément en matière poreuse est formé d'acier inoxydable.

9. Dispositif à palier à pression dynamique selon la revendication 7, dans lequel ledit élément en matière poreuse est formé de céramique.

10. Dispositif à palier à pression dynamique selon l'une quelconque des revendications 2 à 9, comportant en outre un passage de circulation de fluide pour faire circuler un fluide le long d'au moins une partie d'une surface de poussée entre l'élément d'arbre et l'élément de manchon.
